# EUROPÄISCHE PATENTSCHRIFT

(11) **EP 2 126 153 B1**
(45) Veröffentlichungstag und Bekanntmachung des Hinweises auf die Patenterteilung: **18.05.2011**
(21) Anmeldenummer: 08707549.5
(22) Anmeldetag: 05.02.2008
(51) Int. Cl.: C23C 2/00

(54) **VORRICHTUNG UND VERFAHREN ZUM SCHMELZTAUCHBESCHICHTEN EINES METALLBANDES**
DEVICE AND METHOD FOR HOT DIP COATING A METAL STRIP
PROCÉDÉ ET DISPOSITIF DE REVÊTEMENT PAR IMMERSION À CHAUD D'UNE BANDE MÉTALLIQUE

(30) Priorität: 16.02.2007 DE 102007008308; 03.08.2007 DE 102007036743; 24.08.2007 DE 102007040075; 29.11.2007 DE 102007057480
(43) Veröffentlichungstag der Anmeldung: 02.12.2009
(73) Patentinhaber: SMS Siemag AG, 40237 Düsseldorf (DE)
(72) Erfinder: DE KOCK, Peter, 46117 Oberhausen (DE)
(74) Vertreter: Klüppel, Walter
(86) Internationale Anmeldenummer: PCT/EP2008/000878
(87) Internationale Veröffentlichungsnummer: WO 2008/098697

(56) Entgegenhaltungen:
- DE-A1- 3 940 890
- DE-A1- 19 823 854
- DE-A1-102004 030 207

## Beschreibung

Die Erfindung betrifft eine Vorrichtung zum Schmelztauchbeschichten eines Metallbandes sowie eine Verwendung der Vorrichtung.

Eine derartige Vorrichtung ist zum Beispiel aus der DE 10 2004 030 207 A1 grundsätzlich bekannt. Die dort offenbarte Schmelztauchbeschichtungsvorrichtung umfasst einen Behälter für die Metallschmelze, durch welche das Metallband hindurch geleitet wird. Beim Durchlaufen durch die Schmelze wird das Metallband mit Hilfe einer Rolle, welche einen Rollenkörper und einen Rollenzapfen aufweist, in der Schmelze umgelenkt und stabilisiert. Die Rolle bzw. der Rollenzapfen sind wälzgelagert. Zur Sicherstellung ihrer Funktionsfähigkeit müssen die Wälzlager vor der aggressiven Metallschmelze geschützt werden. Zu diesem Zweck muss der Wellendurchtritt zur Metallschmelze durch eine wirksame Dichtung verschlossen werden, um das Eindringen der Schmelze in das Wälzlager zu verhindern. In der besagten Offenlegungsschrift erfolgt die Abdichtung mit Hilfe einer Schleuse, welche den Rollenzapfen mit einer Schleusenkammer umgibt, welche - abgesehen von einer Undichtigkeit am Wellendurchtritt, das heißt am Übergang zum Wellenzapfen - gegenüber der Metallschmelze abgeschlossen bzw. abgedichtet ist. Um ein Eindringen der Metallschmelze durch den Wellendurchtritt zu verhindern, wird die Schleusenkammer mit einem gasförmigen Medium mit einem Gasdruck beaufschlagt. Die Schleuse weist einen Auffangbehälter auf, zum Auffangen von Leckageverlusten in Form von kleineren Mengen an Metallschmelze, die trotz des Gasdrucks in die Schleusenkammer eingedrungen sind. Dieser Auffangbehälter muss von Zeit zu Zeit geleert werden, wozu er zunächst demontiert und nachher wieder montiert werden muss, so dass mit dem Betrieb dieser Schleuse ein erhöhter Wartungsauftwand verbunden ist.

Ausgehend von diesem Stand der Technik liegt der Erfindung die Aufgabe zugrunde, eine bekannte Vorrichtung zum Schmelztauchbeschichten eines Metallbandes dahingehend weiter zu bilden, dass der Wartungsaufwand, insbesondere für die Schleuse, reduziert wird und eine Verwendung für die Vorrichtung anzugeben.

Diese Aufgabe wird durch den Gegenstand des Vorrichtungsanspruchs 1 gelöst. Demnach ist die erfindungsgemäße Schmelztauchbeschichtungsvorrichtung dadurch gekennzeichnet, dass die Schleuse mit der Schleusenkammer in die Metallschmelze eingetaucht ist und dass die Schleusenkammer in Form einer Taucherglocke mit einem kanalförmigen Ausgang ausgebildet ist, welcher in die Metallschmelze eingetaucht und gegenüber dieser offen ist.

Bei der beanspruchten Ausbildung der Schleusenkammer als Taucherglocke werden geringe Leckageverluste bewusst in Kauf genommen. Sie sind unschädlich und verursachen keinen erhöhten Wartungsaufwand, denn die geringen Mengen an Metallschmelze, die entgegen dem Gasdruck durch den Wellendurchtritt in das Innere der Schleusenkammer gelangen, werden dort unmittelbar über den kanalförmigen Ausgang wieder dem Schmelzbad zugeführt. Ein Auffangen der Leckageverluste in einem separaten Auffangbehälter und der damit aus dem Stand der Technik bekannte Wartungsaufwand können deshalb bei der erfindungsgemäßen Ausbildung der Schleuse entfallen.

Der Einfachheit halber wird in der vorliegenden Beschreibung nicht zwischen einer Antriebswelle, die an den Rollenzapfen angekuppelt sein kann und dem Rollenzapfen selber unterschieden; der Begriff Rollenzapfen kann also auch eine Antriebswelle meinen, insbesondere wenn bei einer konkreten Ausführungsform nicht der Rollenzapfen, sondern die Antriebswelle von dem Lagerraum umgeben und in dem Lager drehgelagert ist.

Gemäß einem ersten Ausführungsbeispiel der Erfindung ist die Lagerkammer mit dem Lager für den Rollenzapfen bezüglich des gasförmigen Mediums mit der Schleusenkammer kommunizierend ausgebildet. Dies hat den Vorteil, dass auch in der Lagerkammer der Gasdruck herrscht und auf diese Weise die Metallschmelze von dem Lager fern gehalten wird.

Die beanspruchte Schleuse in Form einer Taucherglocke kann alleine oder auch zusammen mit weiteren Schleusen, die z.B. gegenüber der Metallschmelze offen oder abgeschlossen sein können, zwischen der Lagerkammer und dem Rollenkörper angeordnet sein. Zusammen wirken diese parallel angeordneten Schleusen als redundantes kaskadenförmiges Dichtungssystem zur Abdichtung der Lagerkammer gegenüber der auf der anderen Seite des Dichtungssystems, d. h. im Bereich des Rollenkörpers vorhandenen Metallschmelze. Bei den einzelnen Schleusen, insbesondere - wie oben beschrieben - bei den als Taucherglocke ausgebildeten Schleusen werden Undichtigkeiten bewusst in Kauf genommen, die aber dem primärem Ziel, das heißt dem Freihalten des Lagerraums von der Metallschmelze, nicht entgegenstehen.

Die einzelnen Schleusen und eventuell auch der Lagerraum können grundsätzlich jeweils separat mit dem gasförmigen Medium beaufschlagt und auf diese Weise gegenüber der Metallschmelze abgedichtet werden. Erfindungsgemäß wird jedoch bevorzugt vorgeschlagen, dass der Lagerraum und die verschiedenen Schleusenkammern bezüglich des gasförmigen Mediums miteinander kommunizierend ausgebildet sind und eine Strömung des gasförmigen Mediums zumindest in einer Richtung zulassen. Dies wird besonders vorteilhaft mit einer Lippendichtung im Übergangsbereich zwischen zwei benachbarten Kammern realisiert, wobei die Lippendichtung eine Strömung des gasförmigen Mediums in einer Richtung zulässt und in anderer Richtung als Rückschlagventil für das gasförmige Medium wie auch als Sperre für eventuelle Leckagemengen an Metallschmelze fungiert.

Der Wellendurchtritt im Übergangsbereich zwischen Schleusenkammer und flüssiger Metallschmelze repräsentiert die wesentliche undichte Stelle der Schmelztauchbeschichtungsvorrichtung sowohl für aus der Schleusenkammer in die Metallschmelze entweichendes gasförmiges Medium wie auch für in die Schleusenkammer eindringende Metallschmelze. Die erfindungsgemäße Rückführung der unerwünscht eingedrungenen Metallschmelze in das Schmelzbad wurde oben bereits erwähnt.

Vorteilhafterweise kann benachbart zu dem Wellendurchtritt außerhalb der Schleuse ein Gasabscheideelement vorgesehen sein, zum Auffangen des aus der Schleusenkammer in die Metallschmelze ausgetretenen gasförmigen Mediums. Vorteilhafterweise kann dieses aufgefangene Medium dann über einen Gas-Kreislauf der Lagerkammer oder den Schleusenkammern wieder zugeführt werden. Alternativ kann es jedoch auch in die Umgebungsluft abgegeben werden.

Wenn auch die Undichtigkeiten im Bereich des Wellendurchtritts grundsätzlich in Kauf genommen werden, so sind sie dennoch unerwünscht. Die Dichtigkeit im Bereich des Wellendurchtritts kann erheblich dadurch gesteigert werden, dass dort eine schleifende Dichtung vorgesehen wird, welche durch die Druckdifferenz zwischen dem Gasdruck in der Schleusenkammer und dem Druck im Bad der Metallschmelze parallel zur Rollenachse gegen den Rollenkörper oder gegen einen Vorsprung eines Rollenzapfens gedrückt wird. Eventuell kann dann vorteilhafterweise auf das Gas-Kreislaufsystem, welches die besagte Rückführung des entwichenen Gases vorsieht, verzichtet werden. Alternativ oder zusätzlich zu der schleifenden Dichtung kann im Bereich des Wellendurchtritts auch eine induktive Dichtung vorgesehen sein. Die induktive Dichtung kann auch als Ringdichtung gegenüber dem Rollenzapfen eingesetzt werden.

Vorteilhafterweise wird der Gasdruck in den Schleusenkammern und auch in der Lagerkammer mit Hilfe eines Druckregelkreises überwacht und vorzugsweise konstant gehalten.

Vorteilhafterweise ist in dem Lagerraum auch ein Antrieb zum Drehen des Rollenzapfens und damit der gesamten Rolle integriert. Der Antrieb kann zum Beispiel als Elektromotor oder als speziell ausgebildeter Pressluftmotor ausgebildet sein. Alternativ zu einer Anordnung des Antriebs innerhalb des Lagerraums kann dieser auch extern, das heißt außerhalb der Metallschmelze angeordnet sein, wobei dann der Rollenzapfen und die Rolle über eine mechanische Verbindung, zum Beispiel einen Schubkurbelantrieb, in Drehung versetzt werden.

Die oben genannte Aufgabe wird weiterhin durch die beanspruchte Verwendung für die Schmelztauchbeschichtungsvorrichtung gelöst. Die Vorteile die mit diesem Verfahren verbunden sind, entsprechend den oben mit Bezug auf die Schmelztauchbeschichtungsvorrichtung genannten Vorteilen.

Weitere vorteilhafte Ausgestaltungen der Schmelztauchbeschichtungsvorrichtung und des Verfahrens zu deren Betrieb sind Gegenstand der Unteransprüche.

Der Beschreibung sind fünf Figuren beigefügt, wobei
- Figur 1: eine Schmelztauchbeschichtungsvorrichtung als Ganzes;
- Figur 2: die Lagerung und Abdichtung der Rolle gemäß einem ersten Ausfüh- rungsbeispiel der Erfindung;
- Figur 3: die Lagerung und Abdichtung der Rolle gemäß einem zweiten Ausfüh- rungsbeispiel der Erfindung;
- Figur 4: einen Gas-Kreislauf für die Schmelztauchbeschichtungsvorrichtung; und
- Figur 5: die Lagerung und Abdichtung der Rolle gemäß einem dritten Ausfüh- rungsbeispiel der Erfindung
zeigt.

Die Erfindung wird nachfolgend in Form von Ausführungsbeispielen unter Bezugnahme auf die genannten Figuren detailliert beschrieben. In allen Figuren sind gleiche technische Elemente jeweils mit gleichen Bezugzeichen bezeichnet.

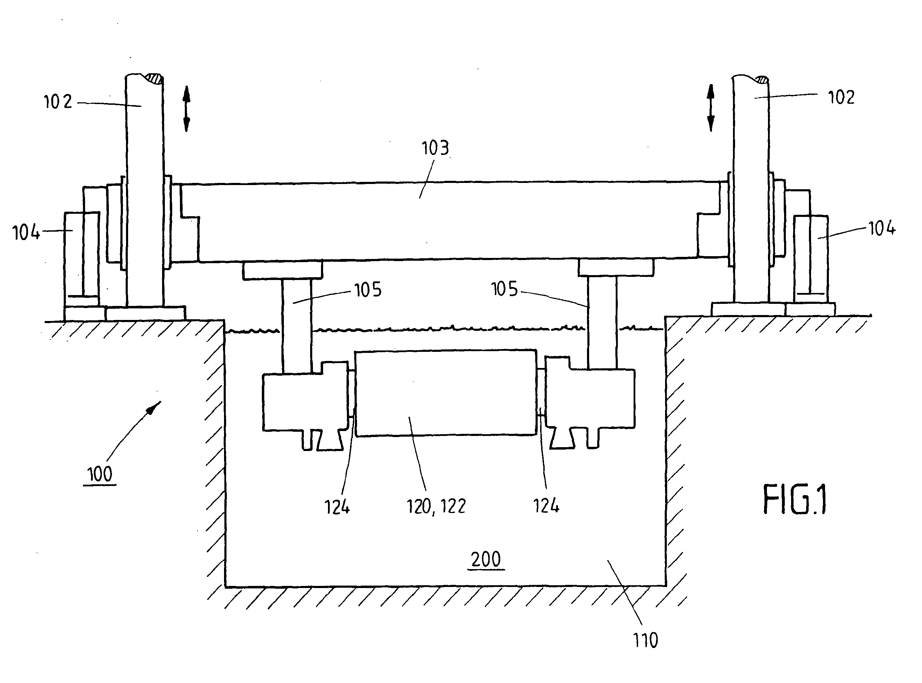

Figur 1 zeigt eine Schmelztauchbeschichtungsvorrichtung 100 zum Beschichten eines Metallbandes (nicht gezeigt). Die Vorrichtung umfasst zwei vertikale Stempel 102 die beiderseits eines Behälters 110 angeordnet sind, der mit einer Metallschmelze 200 gefüllt ist. Entlang dieser Stempel wird eine Quertraverse 103 mit Hilfe von Vertikalantrieben 104 vertikal verfahren. An der Quertraverse 103 hängen zwei Tragarme 105 zwischen denen eine Rolle 120 drehbar gelagert ist. Nach seinem Eintauchen in die Metallschmelze wird das Metallband um die Rolle 120, genauer gesagt um deren Rollenkörper 122 umgelenkt, bevor es die Metallschmelze wieder nach oben verlässt. Mit Hilfe der vertikal verfahrbaren Traverse 103 wird die Rolle mitsamt ihrer Lagerung an den Tragarmen 105 in die Metallschmelze 200 abgesenkt oder zu Wartungszwecken bzw. für Stillstandzeiten aus der Metallschmelze hochgezogen.

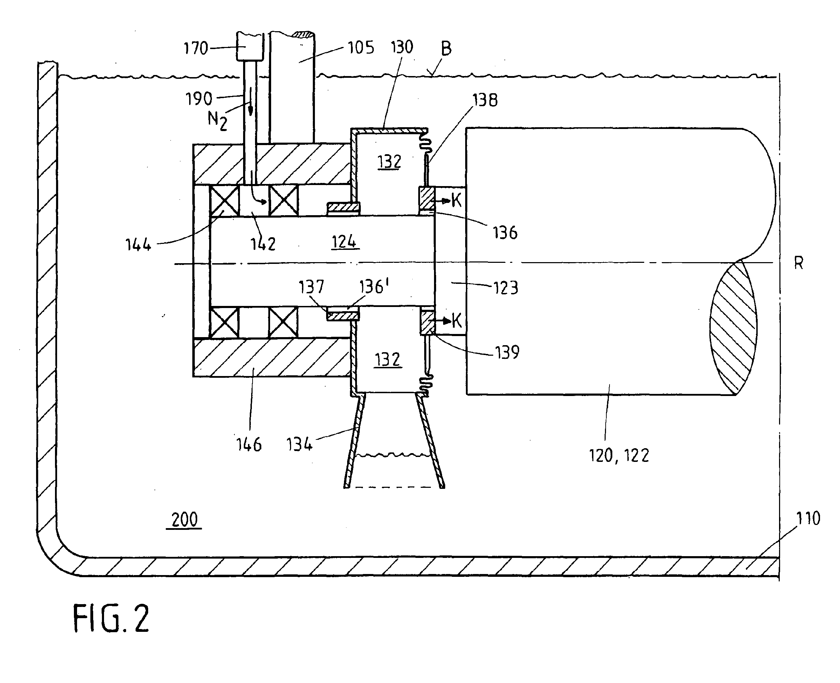

Figur 2 zeigt in Form einer Detailansicht aus Figur 1 ein erstes Ausführungsbeispiel für die erfindungsgemäße Schmelztauchbeschichtungsvorrichtung. Es ist der Behälter 110 mit der darin enthaltenen Metallschmelze 200 zu erkennen, wobei der Badspiegel der Metallschmelze mit dem Bezugzeichen B gekennzeichnet ist. An dem Tragarm 105 hängend ist die Rolle 120 mitsamt ihrer Lagerung eingetaucht in die Metallschmelze 200 zu erkennen. Konkret ist der Rollenzapfen 124 zu erkennen, der beispielsweise in einem Wälzlager 144 in dem Tragarm 105 gelagert ist. Die Umgebung des Wälzlagers wird nachfolgend als Lagerkammer 142 bezeichnet. Zu erkennen ist weiterhin eine Gasleitung 190, zum Zuführen eines gasförmigen Mediums, zum Beispiel Stickstoff in die Lagerkammer 142. Kurz vor ihrem Eintritt in die Lagerkammer 142 ist die Gasleitung 190 vorzugsweise spiralförmig aufgewickelt. Diese spiralförmige Wicklung repräsentiert einen verlängerten Weg für das zugeführte gasförmige Medium N₂ bis dieses in die Lagerkammer 142 eintritt; wenn die spiralförmigen Wicklungen in die heiße Metallschmelze 200 eingetaucht sind wird das gasförmige Medium beim Durchströmen der spiralförmigen Wicklungen vor seinem Eintritt in die Lagerkammer 142 bereits auf die Temperatur der Metallschmelze vorgewärmt.

Zwischen der Lagerkammer 142 und dem Rollenkörper 122 ist eine erfindungsgemäße Schleuse 130 angeordnet, welche den Rollenzapfen 124 mit einer Schleusenkammer 132 umgibt. Die Schleuse 130 ist genau wie das Lagergehäuse 146 und der Rollenkörper 122 in die Metallschmelze 200 eingetaucht und deshalb von Außen von der Metallschmelze umgeben. Erfindungsgemäß ist die Schleuse 130 und deren Schleusenkammer 132 in Form einer Tauchglocke mit einem kanalförmigen Ausgang 134 ausgebildet, welcher während des Betriebs der Schmelztauchbeschichtungsvorrichtung ebenfalls in die Metallschmelze 200 eingetaucht ist; der Ausgang 134 ist gegenüber der Metallschmelze offen.

Die Schleuse 130 ist zwischen der Lagerkammer 142 und dem Rollenkörper 122 angeordnet. Im Übergangsbereich zwischen der Lagerkammer 142 und der Schleusenkammer 132 schließt eine Trennwand zapfenseitig mit einer Buchse 137 ab, welche den Zapfen 124 der Rolle 120 umschließt. Zwischen dem Innendurchmesser der Buchse 137 und dem Außendurchmesser des Zapfens verbleibt ein Ringspalt 136 für einen kontrollierten Durchtritt des gasförmigen Mediums N₂ zwischen der Lagerkammer 142 und der Schleusenkammer 132.

Die gegenüberliegende dem Rollenkörper 122 zugeordnete Wand 138 der Schleusenkammer ist vorzugsweise flexibel bzw. elastisch, zum Beispiel als Membrane ausgebildet. Die Wand 138 schließt zapfenseitig mit einer Ringdichtung 139 ab. Diese Ringdichtung 139 ist jedoch zapfenseitig nicht hundertprozentig dicht, sondern es verbleibt eine gewisse Undichtigkeit gegenüber dem Zapfen 124. Diese Undichtigkeit kann sich sowohl auf das gasförmige Medium N₂ beziehen, welches über die Undichtigkeit aus der Schleusenkammer 132 in die umgebende Metallschmelze 200 entweichen kann, als auch im Hinblick auf die Metallschmelze 200 bestehen, welche durch die Undichtigkeit am Wellendurchtritt 136 in die Schleusenkammer 132 gelangen kann.

Um diese Undichtigkeit zu verringern, ist die Ringdichtung 139 vorzugsweise erfindungsgemäß als schleifende Dichtung ausgebildet, welche an dem Rollenkörper 122 oder einem Vorsprung 123 des Rollenzapfens 124 schleift.

Die in Figur 2 dargestellte Abdichtung des Lagers 144 gegenüber eventuell unerwünschterweise eindringende Schmelze 200 funktioniert wie folgt:

Durch die Gasleitung 190 wird das gasförmige Medium, vorzugsweise Stickstoff in die Lagerkammer 142 geleitet. Dort umspült das gasförmige Medium das Lager 144 bevor es durch den Ringspalt 136' in die Schleusenkammer 132 ausströmt. Die Lagerkammer 142 und die Schleusenkammer 132 sind über den Ringspalt 136 bezüglich des gasförmigen Mediums miteinander kommunizierend ausgebildet. Deshalb stellt sich in beiden Kammern ein gleichgroßer Gasdruck ein. Der Gasdruck wird so groß gewählt, dass ein Eindringen der Metallschmelze 200 durch den offenen kanalförmigen Ausgang 134 der Schleuse 130 in das Innere der Schleusenkammer 132 wirksam verhindert wird. Gleichzeitig wirkt dieser Druck gegen die flexibel ausgebildete Außenwand 138 der Schleusenkammer 132. Diese Außenwand 138 ist außen mit dem von der Metallschmelze 200 ausübten Druck belastet. Die schleifende Ringdichtung 139 wird deshalb mit dem Differenzdruck zwischen dem Gasdruck im Inneren der Schleusenkammer 132 und dem von der Metallschmelze 200 auf die Außenwand 138 ausübten Druck an den Vorsprung 123 oderden Rollenkörper 122 mit einer Kraft K parallel zur Achsrichtung R der Rolle angedrückt. Der Gasdruck im Innern der Schleusenkammer 132 ist zu diesem Zweck geeignet groß gegenüber dem von der Metallschmelze ausgeübten Druck zu dimensionieren. Die Ausbildung der Ringdichtung 139 als Schleifendichtung bewirkt eine erhebliche Verbesserung ihrer Dichtwirkung im Vergleich zu einer reinen Ausbildung als Dichtung gegenüber der Oberfläche des Zapfens. Insgesamt kann auf diese Weise die durch den Wellendurchtritt 136 eindringende Menge an Metallschmelze deutlich reduziert werden. Die eindringende Menge an Metallschmelze wird in Kauf genommen. Sie tropft dann unmittelbar im Bereich der Schleusenkammer 132 von dem Rollenzapfen 124 ab in den kanalförmigen Ausgang 134 und wird auf diese Weise umgehend wieder dem Schmelzbad im Behälter 110 zugeführt. Auf diese Weise gelingt es in sehr effektiver Weise, die Lagerkammer 142 und insbesondere jedoch das Lager 144 ohne Wartungsaufwand vor der aggressiven Metallschmelze 200 zu schützen.

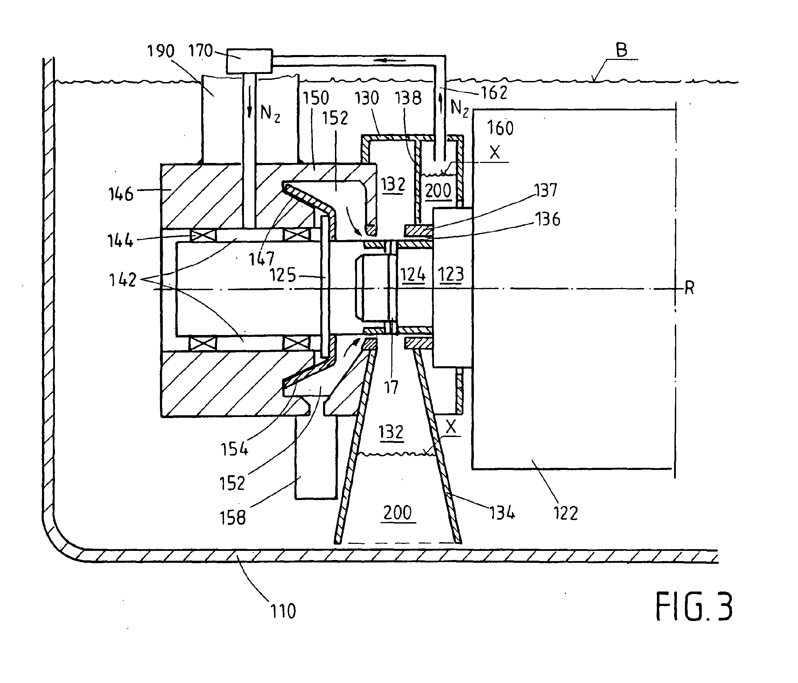

Figur 3 zeigt ein zweites Ausführungsbeispiel für die vorliegende Erfindung. Es unterscheidet sich von dem in Figur 2 gezeigten ersten Ausführungsbeispiel im Wesentlichen dadurch, dass eine weitere Schleuse 150 mit einem weiteren den Rollenzapfen 124 umgebenden Schleusenraum 152 zwischen dem Lagerraum und der aus Figur 2 bekannten Schleuse angeordnet ist. Die zweite Schleuse bewirkt eine nochmals verbesserte Abschirmung des Lagerraumes gegenüber eindringender Metallschmelze; die weitere Schleuse 150 repräsentiert zusammen mit der Schleuse 130 in Taucherglockenform eine kaskadenförmige Dichtung. Die weitere Schleusenkammer 152 ist bezüglich des gasförmigen Mediums mit der Lagerkammer 142 und der Schleusenkammer 132 vorzugsweise kommunizierend ausgebildet. Diese Kommunikation wird durch eine Lippendichtung 154 auf eine Strömungsrichtung des gasförmigen Mediums von der Lagerkammer 142 in die weitere Schleusenkammer 152 beschränkt. Die Lippendichtung 154 ist an einem Flansch 125 auf dem Rollenzapfen 124 fest montiert. Bei einer Drehung des Rollenzapfens und er Rolle dreht sich deshalb die Lippendichtung 154 bei dem in Figur 3 gezeigten Ausführungsbeispiel mit und gleitet dabei auf einem Vorsprung 147 des Lagergehäuses 143. Eine Trennwand zwischen der weiteren Schleusenkammer 152 und der Schleusenkammer 132 ist zum Rollenzapfen 124 hin mit einer Ringdichtung abgedichtet, wenngleich diese Dichtung aufgrund der Drehbewegung des Zapfens nicht hundertprozentig dicht ist und insbesondere ein begrenztes Strömen des gasförmigen Mediums von der weiteren Schleusenkammer 152 in die Schleusenkammer 132 ermöglicht.

Im Unterschied zu der Schleuse 130 ist die weitere Schleuse 150 - abgesehen von der Undichtigkeit bei der zapfenseitigen Dichtung - im Übergangsbereich zwischen der weiteren Schleusenkammer 152 und der Schleusenkammer 132 abgeschottet gegenüber eindringender Metallschmelze 200. Insbesondere ist die weitere Schleuse 150 nicht als Taucherglocke mit einem zur Schmelze 200 offenen Ausgang versehen. Stattdessen weist sie einen zur weiteren Schleusenkammer hin offenen Auffangbehälter 158 auf in dem Metallschmelze, welche die Schleuse 130 passieren konnte, aufgefangen werden kann. Ein Weiterkriechen der Metallschmelze auf der Oberfläche des Rollenzapfens 124 von der weiteren Schleusenkammer 152 in die Lagerkammer 142 wird spätestens durch den besagten Flansch 125, an dem die Lippendichtung 154 befestigt ist, unterbunden. Insofern wird durch die weitere Schleuse 150 im Zusammenwirken mit der Lippendichtung 154 ein zusätzlicher Schutz gegen das Eindringen von Metallschmelze 200 in den Lagerraum 142 geboten.

Sollte an den Wellenzapfen 124 eine Welle, zum Beispiel eine Antriebswelle axial angekuppelt sein, so ist es empfehlenswert, wenn die Schnittstelle, zum Beispiel in Form einer Trennfuge 17, im Bereich der Schleusenkammer 132, besser noch, weil weiter entfernt von dem Durchtritt 136 im Bereich der weiteren Schleusenkammer 152 angeordnet ist. Auf diese Weise kann ein Verkleben oder Verunreinigen der empfindlichen Trennfuge durch Eindringen des flüssigen Metalls 200 verhindert werden.

Zwischen der Schleuse 130 und dem Rollenkörper 122 ist ein Gasabscheideelement 160 vorgesehen, welches ebenfalls in die Schmelze 200 eingetaucht ist. Das Gasabscheideelement dient zum Auffangen geringer Mengen des gasförmigen Mediums, welches aus der Schleusenkammer 132 vorbei an der schleifenden Ringdichtung 139 in die Metallschmelze 200 entweichen kann. Das Gasabscheideelement 160 ist glockenförmig ausgebildet und verfügt über eine Steigleitung 162, über welche das gasförmige Medium aus der Metallschmelze abgeleitet werden kann. Von der Steigleitung 162 aus kann das gasförmige Medium entweder in die Umgebungsluft abgegeben werden oder in einem Behälter (hier nicht gezeigt) gesammelt werden um zur gegebener Zeit die Mittel 170 zur erneuten Zuführung in die Ladekammer 142 zugeführt werden. Die zuletzt genannte Alternative repräsentiert einen geschlossenen Kreislauf für das gasförmige Medium und ist von daher besonders umweltfreundlich. Der Durchtritt zwischen einer Wandung des Gasabscheideelementes 160 und der Oberfläche des Vorsprungs 123 des Rollenzapfens 124 bzw. des Rollenzapfens 124 selber ist erfindungsgemäß so ausgebildet, dass kein gasförmiges Medium in die Metallschmelze 200 außerhalb des Gasabscheideelementes gelangen kann.

Der Gasdruck in der Ladekammer 142, der weiteren Schleusenkammer 152 und der Schleusenkammer 132 wird vorzugsweise mit Hilfe eines Manometers M überwacht und mit Hilfe eines Regelkreises (hier nicht gezeigt) geregelt, vorzugsweise konstant gehalten. In diesem Regelkreis fungiert dann das Mittel 170 zum Zuführen des gasförmigen Mediums in die Lagerkammer 142 als Pumpe bzw. als Stellglied.

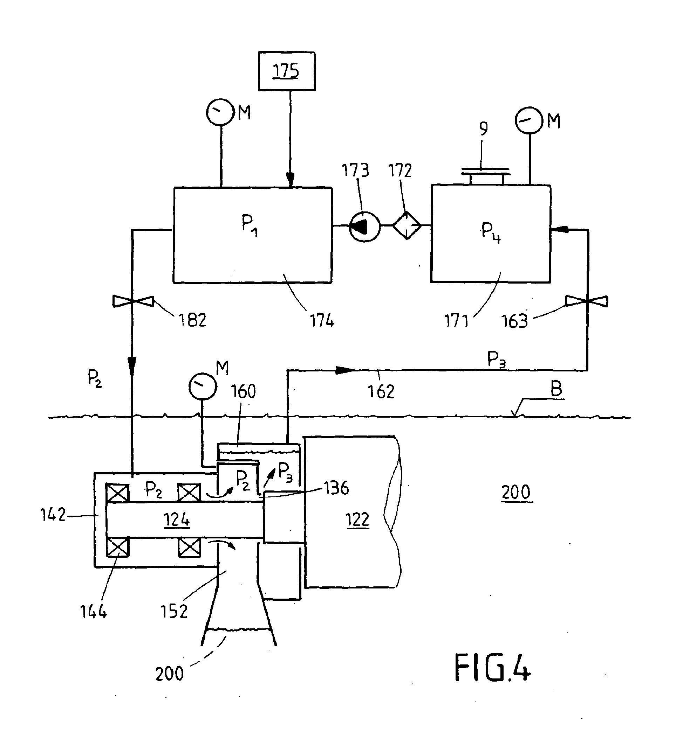

Der Kreislauf für das gasförmige Medium ist in Figur 4 detailliert dargestellt. Das gasförmige Medium N₂ wird mit dem Gasdruck P1 in einem Tank 174 bevorratet. Über eine Drossel 182 wird der Druck des gasförmigen Mediums auf einen Betriebsdruck eingestellt, wie er insbesondere in der Lagerkammer 142 benötigt wird. Das gasförmige Medium fließt dann aus der Lagerkammer 142 über die eventuell zwischengeschaltete weitere Schleusenkammer 132 in die Schleusenkammer 152 und von dort durch den Wellendurchtritt 136 in das Gasabscheideelement 160. Der dortige Gasdruck P3, der von dem Gasdruck in der Schleusenkammer 152 verschieden sein kann, wird über eine zweite Drossel 163 eingestellt. Die Steigleitung 162 mündet in einen Behälter 171 in dem das zurückkehrende verunreinigte gasförmige Medium gesammelt wird. Es ist erforderlich, dass der Gasdruck P3 in dem Gasabscheideelement 160 als individueller Zwischendruck größer eingestellt wird als ein Gasdruck P4 in dem Behälter 171, damit das Gas in dem Gasabscheideelement 160 aufgrund eines Druckgefälles in den Behälter 171 steigt.

Der Behälter 171 und der Tank 174 können als gemeinsame Elemente von mehreren Gaskreisläufen gleichzeitig als Sammelbehälter genutzt werden. Es ist dann erforderlich, dass bei den Gasabscheideelementen, die jeweils den Lagerungen von anderen Rollen auch in unterschiedlichen Tiefen in der Metallschmelze angeordnet sein können, jeweils ein höherer Druck P3 als in dem Behälter 171 eingestellt ist. Der Behälter 171 verfügt zu Reinigungszwecken über ein Mannloch 9. Der Gas-Kreislauf wird geschlossen durch eine Verbindung zwischen dem Behälter 171 und dem Tank 174, wobei diese Verbindung ein Filter 172 zum Reinigen des zurückzuführenden Gasmediums und eine Pumpe 173 aufweist zum Pumpen des gasförmigen Mediums in den Tank 174 und in den gesamten Kreislauf. Eventuelle Gasverluste in dem Gas-Kreislauf werden aus einem Gas-, insbesondere Stickstoffnetz der Schmelztauchbeschichtungsvorrichtung 100 oder einem Vorratstank 175 ergänzt. Sowohl in dem Behälter 171 wie auch in dem Tank 174 kann der Druck mit Hilfe eines Manometers M überwacht werden.

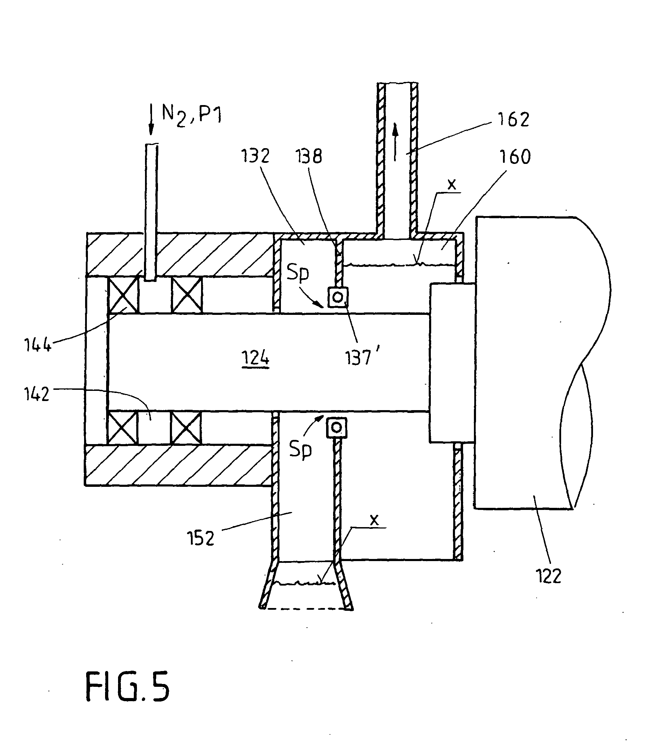

Figur 5 offenbart ein drittes Ausführungsbeispiel für die erfindungsgemäße Schmelztauchbeschichtungsvorrichtung. Zwischen der Lagerkammer 142 mit den Lagern 144 und dem Rollenkörper 122 ist die Schleusenkammer 132 und das Gasabscheideelement 160 angeordnet. Die Schleusenkammer 132 ist als Taucherglocke ausgebildet. An dem zapfenseitigen Ende der Trennwand 138 zwischen der Schleusenkammer 132 und dem Gasabscheideelement 160 ist eine induktive Dichtung 137' angebracht. Diese induktive Dichtung besteht im Wesentlichen aus einer Spule mit koaxial zu dem Rollenzapfen 124 gewickelten stromdurchflossenen Leitern. Das durch diesen stromdurchflossenen Leiter induzierte Magnetfeld hält einen Eintrag der Metallschmelze 200 aus dem Gasabscheideelement 160 in die Schleusenkammer 132 zurück. Das Bezugzeichen x in Figur 5 bezeichnet den Badspiegel der Metallschmelze. Der Spalt Sp zwischen der induktiven Dichtung und dem Rollenzapfen 124 begrenzt den Gasdurchtritt von der Kammer 132 in das Gasabscheideelement 160.

## Patentansprüche

1. Schmelztauchbeschichtungsvorrichtung (100) zum Beschichten eines Metallbandes mit einer Metallschmelze (200), mit
einem Behälter (110) für die Metallschmelze (200);
einer in die Metallschmelze eingetauchten Rolle (120) zum Umlenken oder Stabilisieren des Metallbandes beim Durchlaufen durch die Metallschmelze, wobei die Rolle einen Rollenkörper (122) und einen Rollenzapfen (124) aufweist;
einer Schleuse (130), welche den Rollenzapfen (124) mit einer Schleusenkammer (132) umgibt; und mit
Mitteln (170) zum Zuführen von einem gasförmigen Medium (N₂) mit einem Gasdruck in die Schleusenkammer (132) zum Abdichten der Schleusenkammer gegen die Metallschmelze (200),
**dadurch gekennzeichnet,**
**dass** die Schleuse mit der Schleusenkammer (132) in die Metallschmelze (200) eingetaucht ist; und
**dass** die Schleusenkammer (132) in Form einer Taucherglocke mit einem kanalförmigen Ausgang (134) ausgebildet ist, welcher in die Metallschmelze (200) eingetaucht und gegenüber dieser offen ist.

2. Schmelztauchbeschichtungsvorrichtung (100) nach Anspruch 1,
**gekennzeichnet durch**,
eine Lagerkammer (142) mit einem Lager (144) auf dem Rollenzapfen (124) zum Lagern des Rollenzapfens in einem Tragarm (105), wobei die Lagerkammer (142) bezüglich des gasförmigen Mediums (N₂) mit der Schleusenkammer (132) kommunizierend ausgebildet ist.

3. Schmelztauchbeschichtungsvorrichtung nach Anspruch 2,
**dadurch gekennzeichnet**
**dass** in der Lagerkammer (142) eine Antriebseinrichtung angeordnet ist zum Drehen des Rollenzapfens und damit des Rollenkörpers.

4. Schmelztauchbeschichtungsvorrichtung nach Anspruch 2 oder Anspruch 3,
**dadurch gekennzeichnet,**
**dass** die Lagerkammer mit der Schleusenkammer zusammenfällt oder separat davon ausgebildet ist, wobei in letzterem Fall die Schleusenkammer (132) zwischen der Lagerkammer (142) und dem Rollenkörper (122) angeordnet ist.

5. Schmelztauchbeschichtungsvorrichtung (100) nach einem der vorangegangenen Ansprüche,
**gekennzeichnet durch**,
mindestens eine weitere Schleuse (150) mit einer weiteren den Rollenzapfen (124) umgebenden Schleusenkammer (152) zwischen der Lagerkammer und dem Rollenkörper.

6. Schmelztauchbeschichtungsvorrichtung (100) nach Anspruch 5,
**dadurch gekennzeichnet,**
**dass** die weitere Schleusenkammer (152) mit der Schleusenkammer (132) oder mit der Lagerkammer (142) oder mit der Schleusenkammer und der Lagerkammer bezüglich des gasförmigen Mediums (N₂) kommunizierend ausgebildet ist.

7. Schmelztauchbeschichtungsvorrichtung (100) nach einem der Ansprüche 2 bis 6,
**dadurch gekennzeichnet,**
**dass** zwischen zwei benachbarten Kammern (132, 142, 152) eine Lippendichtung (154), die das gasförmige Medium zumindest in einer Strömungsrichtung passieren lässt und in Gegenrichtung insbesondere für die Metallschmelze als Rückschlagventil fungiert, oder ein Ringspalt (136) zwischen dem Außendurchmesser des Rollenzapfens und dem Rand einer Öffnung in einer gemeinsamen Wand der beiden Kammern für einen Gasdurchtritt vorgesehen ist.

8. Schmelztauchbeschichtungsvorrichtung (100) nach Anspruch 7,
**dadurch gekennzeichnet,**
**dass** die weitere Schleusenkammer (152) - abgesehen von Undichtigkeiten, zum Beispiel in Form des Ringspaltes - gegenüber der Metallschmelze (200) und für das gasförmiges Medium (N₂) geschlossen ist und einen Auffangbehälter (158) aufweist für evtl. durch die Undichtigkeiten in die weitere Schleusenkammer (152) eingedrungene Metallschmelze.

9. Schmelztauchbeschichtungsvorrichtung (100) nach einem der Ansprüche 5 bis 7,
**dadurch gekennzeichnet,**
**dass** eine der Metallschmelze (200) ausgesetzte Wand (138) der Schleusenkammer (132) oder der weiteren Schleusenkammer (152), flexibel, z.B. als Membran, ausgebildet ist und dass der dem Rollenzapfen zugewandte Rand der Öffnung in dieser Wand als schleifende Dichtung (139) ausgebildet ist, welche durch den erhöhten Gasdruck in der Schleusenkammer (132) oder in der weiteren Schleusenkammer (152) gegenüber dem Umgebungsdruck in der Metallschmelze parallel zur Rollenachse gegen den Rollenkörper (122) oder einen Vorsprung (123) des Rollenzapfens gedrückt wird.

10. Schmelztauchbeschichtungsanlage nach einem der vorangegangenen Ansprüche,
**gekennzeichnet durch**,
eine induktive Dichtung zum Abdichten eines Übergangsbereiches zwischen der Metallschmelze (20a) und der Schleusenkammer (132) oder der weiteren Schleusenkammer (152).

11. Schmelztauchbeschichtungsvorrichtung (100) nach einem der vorangegangenen Ansprüche,
**gekennzeichnet durch**,
ein Gasabscheideelement (160) zum Auffangen des aus einer der Kammern (132, 142, 152) in die Metallschmelze ausgetretenen gasförmigen Mediums (N₂).

12. Schmelztauchbeschichtungsvorrichtung (100) nach Anspruch 11,
**gekennzeichnet durch**,
ein Gas-Kreislaufsystem, wobei das von dem Gasabscheideelement (160) aufgefangene gasförmiges Medium (N₂) über das Mittel (170) zum Zuführen wieder in die Kammern zurückgeführt wird.

13. Schmelztauchbeschichtungsvorrichtung (100) nach einem der Ansprüche 2 bis 12,
**dadurch gekennzeichnet,**
**dass** die Mittel (170) zum Zuführen des gasförmigen Mediums so angeordnet sind, dass das gasförmiges Medium (N₂) zunächst in die Lagerkammer (142) eingebracht wird, um dort das Lager (144) zu umspülen, bevor es in die Schleusenkammer (132) oder die weitere Schleusenkammer (152) gelangt.

14. Schmelztauchbeschichtungsvorrichtung (100) nach einem der vorangegangenen Ansprüche,
**gekennzeichnet durch**,
einen Regelkreis zum Regeln, insbesondere Konstanthalten, des Gasdrucks in der Schleusenkammer (132) oder der weiteren Schleusenkammer (152) oder der Lagerkammer (142), wobei der Gasdruck in zumindest einer der Kammern mithilfe von einem Manometer (M) überwacht wird.

15. Verwendung einer Schmelztauchbeschichtungsvorrichtung (100) mit einer Rolle (120), die einen Rollenkörper (122) und einen Rollenzapfen (124) aufweist, und mit mindestens einer Schleuse (130), welche den Rollenzapfen (124) mit einer Schleusenkammer (132) umgibt, umfassend die Schritte:
Durchleiten eines Metallbandes durch eine Metallschmelze (200);
Umlenken oder Stabilisieren des Metallbandes in der Metallschmelze mit Hilfe der Rolle (120); und
Zuführen von einem gasförmiges Medium (N₂) mit einem Gasdruck in die Schleusenkammer (132) zum Abdichten der Schleusenkammer gegen die Metallschmelze (200);
**gekennzeichnet durch**
zumindest teilweises Verdrängen der Metallschmelze (200) aus einem in die Metallschmelze eingetauchten kanalförmigen offenen Ausgang (134) der als Taucherglocke ausgebildeten Schleusenkammer (132) **durch** den Gasdruck in der Schleusenkammer.

16. Verwendung nach Anspruch 15,
**dadurch gekennzeichnet,**
**dass** das gasförmige Medium (N₂) zuerst in eine Lagerkammer (142) geleitet wird, um von dort aus in die mindestens eine Schleusenkammer (132, 152) weiterzuströmen.

17. Verwendung nach Anspruch 16,
**dadurch gekennzeichnet,**
**dass** das gasförmige Medium (N₂) von einer der Schleusenkammern (152, 132) in die Metallschmelze (200) austritt und dort aufgefangen wird.

18. Verwendung nach Anspruch 17,
**dadurch gekennzeichnet,**
**dass** das aufgefangene gasförmige Medium (N₂) der Lagerkammer (142) oder einer der Schleusenkammern (132, 152) wieder zugeführt wird.

19. Verwendung nach Anspruch 17 oder 18,
**dadurch gekennzeichnet,**
**dass** eine Dichtung (139) im Übergangsbereich zwischen einer Schleusenkammer (132) und der Metallschmelze (200) aufgrund des Gasdrucks in der Schleusenkammer mit einer Kraft parallel zur Rollenachse (R) an den Rollenkörper (122) oder einen Vorsprung (123) des Rollenzapfens angedrückt wird.

20. Verwendung nach Anspruch 17,
**dadurch gekennzeichnet,**
**dass** die Traverse (103) mit der Tauchrolle über eine Hubvorrichtung (102, 104) aus dem Zinkbad gehoben bzw. abgesenkt werden kann, um ein gleichmäßiges Eintauchen der nach unten offenen Schleusenkammern in das Zinkbad zu gewährleisten.

## Claims

1. Hot-dip coating device (100) for coating a metal strip with a metal melt (200), comprising
a container (110) for the metal melt (200);
a roll (120), which is immersed in the metal melt, for deflecting or stabilising the metal strip during passage through the metal melt, wherein the roll comprises a roll body (122) and a roll pin (124);
a lock (130), which surrounds the roll pin (124) by a lock chamber (132); and
means (170) for feeding a gaseous medium (N₂) at a gas pressure to the lock chamber (132) for sealing the lock chamber relative to the metal melt (200),
**characterised in that**
the lock with the lock chamber (132) is immersed in the metal melt (200); and
the lock chamber (132) is constructed in the form of a diving bell with a channel-shaped outlet (134) which is immersed in the metal melt (200) and open relative thereto.

2. Hot-dip coating device (100) according to claim 1, **characterised by** a bearing chamber (142) with a bearing (144) on the roll pin (124) for mounting the roll pin in a support arm (105), wherein the bearing chamber (142) is constructed to communicate with the lock chamber (132) with respect to the gaseous medium (N₂).

3. Hot-dip coating device (100) according to claim 2, **characterised in that** a drive device for rotating the roll pin and thus the roll body is arranged in the bearing chamber (142).

4. Hot-dip coating device (100) according to claim 2 or claim 3, **characterised in that** the bearing chamber coincides with or is constructed separately from the lock chamber, wherein in the latter case the lock chamber (132) is arranged between the bearing chamber (142) and the roll body (122).

5. Hot-dip coating device (100) according to any one of the preceding claims, **characterised by** at least one further lock (150) with a further lock chamber (152), which is surrounded by the roll pin (124), between the bearing chamber and roll body.

6. Hot-dip coating device (100) according to claim 5, **characterised in that** the further lock chamber (152) is constructed to communicate with the lock chamber (132) or with the bearing chamber (142) or with the lock chamber and the bearing chamber with respect to the gaseous medium (N₂).

7. Hot-dip coating device (100) according to any one of claims 2 to 6, **characterised in that** a lip seal (154), which allows the gaseous medium to pass at least in one flow direction and in the opposite direction functions as a non-retum valve, particularly for the metal melt, is provided between two adjacent chambers (132, 142, 152) or an annular gap (136) is provided between the outer diameter of the roll pin and the edge of an opening in a common wall of the two chambers for passage of gas.

8. Hot-dip coating device (100) according to claim 7, **characterised in that** the further lock chamber (152) is closed - apart from leakages, for example in the form of the annular gap - relative to the metal melt (200) and for the gaseous medium (N₂) and comprises a collecting container (158) for metal melt possibly penetrating through the leakages into the further lock chamber (152).

9. Hot-dip coating device (100) according to any one of claims 5 to 7, **characterised in that** a wall (138), which is exposed to the metal melt (200), of the lock chamber (132) or the further lock chamber (152) is constructed to be flexible, for example as a membrane, and that the edge, which faces the roll pin, of the opening in this wall is constructed as a rubbing seal (139) which is pressed parallel to the roll axis against the roll body (122) or a projection (123) of the roll pin by the increased gas pressure in the lock chamber (132) or in the further lock chamber (152) relative to the ambient pressure in the metal melt.

10. Hot-dip coating plant according to any one of the preceding claims, **characterised by** an inductive seal for sealing a transition region between the metal melt (20a) and the lock chamber (132) or the further lock chamber (152).

11. Hot-dip coating device (100) according to any one of the preceding claims, **characterised by** a gas separator element (160) for collecting the gaseous medium (N₂) escaping from one of the chambers (132, 142, 152) into the metal melt.

12. Hot-dip coating device (100) according to claim 11, **characterised by** a gas circuit system, wherein the gaseous medium (N₂) collected by the gas separator element (160) is fed back to the chambers by way of the means (170) for feeding.

13. Hot-dip coating device (100) according to any one of claims 2 to 12, **characterised in that** the means (170) for feeding the gaseous medium is so arranged that the gaseous medium (N₂) is initially introduced into the bearing chamber (142) in order to flow around the bearing (144) there before it passes into the lock chamber (132) or the further lock chamber (152).

14. Hot-dip coating device (100) according to any one of the preceding claims, **characterised by** a regulating circuit for regulating, particularly keeping constant, the gas pressure in the lock chamber (132) or the further lock chamber (152) or the bearing chamber (142), wherein the gas pressure is monitored in at least one of the chambers with the help of a manometer (M).

15. Use of a hot-dip coating device (100) with a roll (120), which comprises a roll body (122) and a roll pin (124), and with at least one lock (130), which surrounds the roll pin (124) by a lock chamber (132), comprising the steps:
conducting a metal strip through a metal melt (200);
deflecting or stabilising the metal strip in the metal melt with the help of the roll (120); and
feeding a gaseous medium (N₂) at a gas pressure into the lock chamber (132) for sealing the lock chamber relative to the metal melt (200);
**characterised by**
at least partial displacement of the metal melt (200) out of a channel-shaped open outlet (134), which is immersed in the metal melt, of the lock chamber (132), which is constructed as a diving bell, by the gas pressure in the lock chamber.

16. Use according to claim 15, **characterised in that** the gaseous medium (N₂) is initially conducted into a bearing chamber (142) in order to flow on from there into the at least one lock chamber (132, 152).

17. Use according to claim 16, **characterised in that** the gaseous medium (N₂) issues from one of the lock chambers (152, 132) into the metal melt (200) and is collected there.

18. Use according to claim 17, **characterised in that** the collected gaseous medium (N₂) is returned to the bearing chamber (142) or one of the lock chambers (132, 152).

19. Use according to claim 17 or 18, **characterised in that** a seal (139) in the transition region between a lock chamber (132) and the metal melt (200) is pressed by a force parallel to the roll axis (R) against the roll body (122) or a projection (123) of the roll pin by way of the gas pressure in the lock chamber.

20. Use according to claim 17, **characterised in that** the cross member (103) with the immersion roll can be raised from or lowered into the zinc bath by way of a lifting device (102, 104) so as to ensure uniform immersion of the downwardly open lock chambers in the zinc bath.

## Revendications

1. Dispositif d'enduction par galvanisation à chaud (100) pour l'enduction d'un ruban métallique avec un bain de fusion (200), comprenant :
un récipient (110) pour le bain de fusion (200) ;
une poulie (120) immergée dans le bain de fusion pour le renvoi ou la stabilisation du ruban métallique lors de son passage à travers le bain de fusion, la poulie présentant un corps de poulie (122) et un axe de poulie (124) ;
une écluse (130) qui entoure l'axe de poulie (124) avec un sas (132) ; et
des moyens (170) pour acheminer un milieu gazeux (N₂) avec une pression de gaz dans le sas (132) pour rendre le sas étanche par rapport au bain de fusion (200) ;
**caractérisé**
**en ce que** l'écluse est immergée avec le sas (132) dans le bain de fusion (200) ; et
**en ce que** le sas (132) est réalisé sous la forme d'une cloche d'immersion comprenant une sortie (134) en forme de canal, qui est immergée dans le bain de fusion (200) et ouverte par rapport à ce dernier.

2. Dispositif d'enduction par galvanisation à chaud (100) selon la revendication 1, **caractérisé par** un logement de palier (142) comprenant un palier (144) sur l'axe de poulie (124) pour le logement de l'axe de poulie dans un bras de support (105), le logement de palier (142) étant réalisé pour communiquer, en ce qui concerne le milieu gazeux (N₂) avec le sas (132).

3. Dispositif d'enduction par galvanisation à chaud selon la revendication 2, **caractérisé en ce qu'**un mécanisme d'entraînement est disposé dans le logement de palier (142) pour la mise en rotation de l'axe de poulie, partant du corps de poulie.

4. Dispositif d'enduction par galvanisation à chaud selon la revendication 2 ou 3, **caractérisé en ce que** le logement de palier coïncide avec le sas ou est réalisé séparément par rapport à ce dernier ; dans ce dernier cas, le sas (132) est disposé entre le logement de palier (142) et le corps de poulie (122).

5. Dispositif d'enduction par galvanisation à chaud (100) selon l'une quelconque des revendications précédentes, **caractérisé par**
au moins une écluse supplémentaire (150) comprenant un sas (152) supplémentaire qui entoure l'axe de poulie (124), entre le logement de palier et le corps de poulie.

6. Dispositif d'enduction par galvanisation à chaud (100) selon la revendication 5, **caractérisé en ce que** le sas supplémentaire (152) est réalisé pour communiquer avec le sas (132) ou avec le logement de palier (142) ou bien avec le sas et le logement de palier, en ce qui concerne le milieu gazeux (N₂).

7. Dispositif d'enduction par galvanisation à chaud (100) selon l'une quelconque des revendications 2 à 6, **caractérisé**
**en ce qu'**on prévoit entre deux chambres voisines (132, 142, 152) un joint d'étanchéité à lèvre (154) qui laisse passer le milieu gazeux au moins dans une direction d'écoulement et qui fait office de soupape antiretour dans l'autre direction, en particulier pour le bain de fusion, ou bien une fente annulaire (136) entre le diamètre externe de l'axe de poulie et le bord d'une ouverture dans une paroi commune des deux chambres, pour le passage du gaz.

8. Dispositif d'enduction par galvanisation à chaud (100) selon la revendication 7, **caractérisé en ce que** le sas supplémentaire (152) - indépendamment des inétanchéités, par exemple sous la forme de la fente annulaire - est fermé par rapport au bain de fusion (200) et pour le milieu gazeux (N₂) et présente un récipient de récupération (158) pour le bain de fusion qui s'est introduit le cas échéant à travers les inétanchéités dans le sas supplémentaire (152).

9. Dispositif d'enduction par galvanisation à chaud (100) selon l'une quelconque des revendications 5 à 7, **caractérisé**
**en ce qu'**une paroi (138) du sas (132) ou du sas supplémentaire (152), exposée au bain de fusion (200) est réalisée pour être flexible, par exemple sous la forme d'une membrane, et en ce que le bord de l'ouverture dans cette paroi, qui se tourne vers l'axe de poulie, est réalisé sous la forme d'un joint d'étanchéité rasant (139) qui, en cas d'augmentation de la pression du gaz régnant dans le sas (132) ou dans le sas supplémentaire (152) par rapport à la pression ambiante dans le bain de fusion, est comprimé parallèlement à l'axe de poulie contre le corps de poulie (122) ou contre une saillie (123) de l'axe de poulie.

10. Installation d'enduction par galvanisation à chaud selon l'une quelconque des revendications précédentes, **caractérisée par**
un joint d'étanchéité inductif pour l'étanchéisation d'une zone de transition entre le bain de fusion (20a) et le sas (132) ou le sas supplémentaire (152).

11. Dispositif d'enduction par galvanisation à chaud (100) selon l'une quelconque des revendications précédentes, **caractérisé par**
un élément de séparation des gaz (160) pour la récupération du milieu gazeux (N₂) qui quitte les chambres (132, 142, 152) pour pénétrer dans le bain de fusion.

12. Dispositif d'enduction par galvanisation à chaud (100) selon la revendication 11, **caractérisé par** un système de circulation du gaz dans lequel le milieu gazeux (N₂) récupéré par l'élément de séparation des gaz (160) est recyclé via les moyens (170) pour être réacheminé dans les chambres.

13. Dispositif d'enduction par galvanisation à chaud (100) selon l'une quelconque des revendications 2 à 12, **caractérisé**
**en ce que** les moyens (170) pour acheminer le milieu gazeux sont disposés de telle sorte que le milieu gazeux est d'abord introduit dans le logement de palier (142) pour y baigner le palier (144) avant d'aboutir dans le sas (132) ou dans le sas supplémentaire (152).

14. Dispositif d'enduction par galvanisation à chaud (100) selon l'une quelconque des revendications précédentes, **caractérisé par**
un circuit de réglage pour le réglage, en particulier pour la stabilisation de la pression du gaz dans le sas (132) ou dans le sas supplémentaire (152) ou encore dans le logement de palier (142), la pression de gaz étant surveillée dans au moins une des chambres à l'aide d'un manomètre (M).

15. Utilisation d'un dispositif d'enduction par galvanisation à chaud (100) comprenant une poulie (120) qui présente un corps de poulie (122) et un axe de poulie (124), et au moins une écluse (130) qui entoure l'axe de poulie (124) avec un sas (132), comprenant les étapes consistant à :
guider un ruban métallique à travers un bain de fusion (200) ;
renvoyer ou stabiliser le ruban métallique dans le bain de fusion à l'aide de la poulie (120) ; et
acheminer un milieu gazeux (N₂) avec une pression de gaz dans le sas (132) pour rendre le sas étanche par rapport au bain de fusion (200) ;
**caractérisée par**
un déplacement au moins partiel du bain de fusion (200) à partir d'une sortie ouverte (134) en forme de canal, immergée dans le bain de fusion, du sas (132) réalisé sous la forme d'une cloche d'immersion, via la pression de gaz régnant dans le sas.

16. Utilisation selon la revendication 15,
**caractérisée**
**en ce que** le milieu gazeux (N₂) est d'abord guidé dans un logement de palier (142) pour circuler ensuite à partir de là jusque dans au moins un sas (132, 152).

17. Utilisation selon la revendication 16,
**caractérisée**
**en ce que** le milieu gazeux (N₂) quitte un des sas (152, 132) pour pénétrer dans le bain de fusion (200), où il est récupéré.

18. Utilisation selon la revendication 17,
**caractérisée**
**en ce que** le milieu gazeux (N₂) récupéré est renvoyé dans le logement de palier (142) ou dans un des sas (132, 152).

19. Utilisation selon la revendication 17 ou 18,
**caractérisée**
**en ce qu'**un joint d'étanchéité (139) dans la zone de transition entre un sas (132) et le bain de fusion (200), est comprimé, sur base de la pression de gaz régnant dans le sas, avec une force s'exerçant parallèlement à l'axe de poulie (R) contre le corps de poulie (122) ou contre une saillie (123) de l'axe de poulie.

20. Utilisation selon la revendication 17,
**caractérisée**
**en ce que** la traverse (103) comprenant la poulie d'immersion peut être soulevée respectivement abaissée par rapport au bain de galvanisation, via un dispositif de levage (102, 104), afin de garantir une immersion uniforme des sas ouverts vers le bas dans le bain de galvanisation.
